# EUROPEAN PATENT SPECIFICATION

(11) **EP 4 272 612 B1**
(45) Date of publication and mention of the grant of the patent: **28.08.2024**
(21) Application number: 23166142.2
(22) Date of filing: 31.03.2023
(51) Int. Cl.: A47J 31/46

(54) **COFFEE MACHINE FOR DOMESTIC USE**
HAUSHALTSKAFFEEMASCHINE
MACHINE À CAFÉ À USAGE DOMESTIQUE

(30) Priority: 02.05.2022 IT 202200008777
(43) Date of publication of application: 08.11.2023
(73) Proprietor: Bonferraro S.p.A., 37060 Bonferraro (VR) (IT)
(72) Inventor: BERTABONI, Giulio, 46033 Castel d Ario MN (IT); RUSSO, Andrea, 37122 Verona VR (IT); TOSI, Mauro, 37051 Bovolone VR (IT)
(74) Representative: Concone, Emanuele

(56) References cited:
- EP-B1- 3 618 671
- WO-A1-2010/043952
- WO-A1-2010/121299
- WO-A1-2014/071856

## Description

The present invention relates to coffee machines for domestic use, and specifically to a machine equipped with a two-way solenoid valve for managing the dispensing of coffee or hot water/steam.

It is known that a coffee machine for domestic use essentially comprises a water tank (manually charged by the user), a pump that draws water from the tank and sends it to a heater in which the water is either heated or turned into steam, and a subsequent three-way connector with two dispensing outlets. A first outlet is to a spring-loaded non-return valve for dispensing coffee obtained by hot water passing through coffee powder, and a second outlet is to a mechanical valve for dispensing through a wand hot water or steam to whip milk.

In traditional machines, the selection of the type of dispensing takes place through a push-button and a control knob on the mechanical hot water/steam valve, which also includes a microswitch that detects the steam demand position and correspondingly controls the heater. In practice, the knob has one closed position and two open positions depending on whether the machine is to deliver hot water or steam:
(a) in the closed position, the mechanical dispensing valve is closed and thus maintains in the hydraulic circuit downstream of the heater the water pressure generated by the pump, this pressure being sufficient to open the spring-loaded non-return valve so as to direct the hot water to the coffee extraction when the coffee dispensing button is pressed;
(b) in the hot water demand position, the dispensing valve is open, so that the pressure in the hydraulic circuit is substantially equal to atmospheric pressure and therefore insufficient to open the spring-loaded non-return valve (typically set at about 4.5 bar) so as to direct the hot water to the dispensing wand;
(c) in the steam demand position, the situation is the same as in (b) above, but the microswitch that controls the heater is also activated so that the water fed by the pump is heated more to the point of turning it into steam.

This known configuration requires several mechanical components and thus a significant manufacturing cost even for a laborious assembly process. In addition, the presence of the knob necessarily assumes that the mechanical hot water/steam dispensing valve is located on the perimeter of the machine housing, in a position where the user can intervene in the hydraulic circuit via the external knob, resulting in limitations in aesthetic design and internal component layout.

EP 3618671 describes a tea brewing machine comprising a two-way diverter valve arranged downstream of the heater and upstream of the beverage outlet non-return valve and the hot water/steam dispensing wand. The choice of the fluid to be dispensed is made through corresponding buttons on a machine control panel, said buttons also being operationally connected to the heater to set its water heating level.

WO 2010/121299 describes a coffee brewing machine with a similar configuration but without the non-return valve.

This type of configuration allows for fewer components, since the knob, mechanical hot water/steam valve, and associated microswitch are eliminated, thus reducing the cost of production and increasing the reliability of the machine. In addition, there is greater design freedom, as the diverter solenoid valve can be placed anywhere within the machine downstream of the heater, and the aesthetic design is also not affected by the need for an external knob.

The purpose of the present invention is to provide a coffee machine that is even simpler and more economical than prior art machines. Said purpose is achieved by means of a coffee machine in which the non-return valve is integrated into the diverter valve. Other advantageous features of the present machine are specified in the dependent claims.

The main advantage of the coffee machine according to the invention is to achieve further structural simplification, thereby reducing the cost of production and increasing the reliability of the machine.

Further advantages and features of the coffee machine according to the present invention will be apparent to those skilled in the art from the following detailed description of an embodiment thereof with reference to the only attached figure in which a diagram of the main components of the machine is depicted.

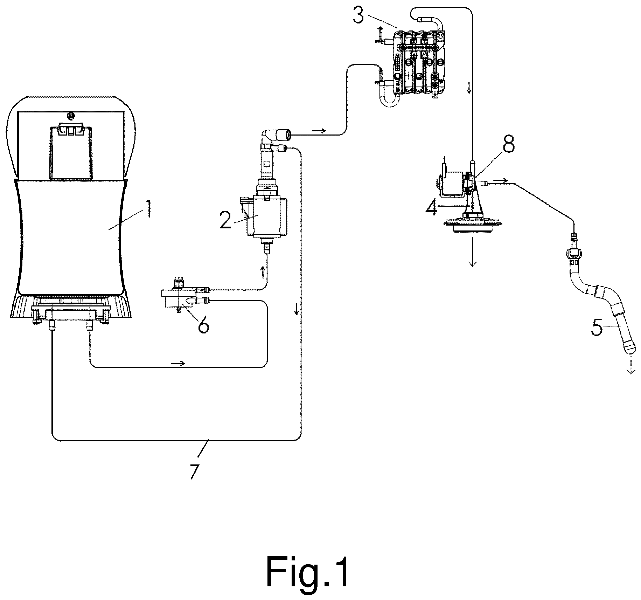

Referring to said Fig.1, it can be seen that a coffee machine according to the invention traditionally includes a water tank 1, a pump 2 that draws water from tank 1 and sends it to a heater 3 in which the water is either heated or turned into steam, a spring-loaded non-return valve 4 (typically a mushroom valve with a conical spring) that controls the outlet for coffee, and a wand 5 for dispensing hot water or steam. A flow meter 6 is preferably provided between reservoir 1 and pump 2 to measure the amount of water drawn from tank 1, and pump 2 is preferably a self-priming pump also connected to tank 1 via a return conduit 7, as shown for example in WO 2014/071856.

A two-way diverter solenoid valve 8, arranged downstream of heater 3 and upstream of the non-return valve 4 of the coffee outlet and the hot water/steam dispensing wand 5, allows the user to choose, by means of special buttons arranged on the machine control panel, among the three dispensing possibilities (i.e., coffee, hot water, or steam) by correspondingly setting the position of the solenoid valve 8 and the power of heater 3:
(a) by pressing the coffee button, solenoid valve 8 is set to output to the spring-loaded non-return valve 4, which opens in the traditional way, the circuit being pressurized because the output to wand 5 is closed (typically this is the condition with solenoid valve 8 not energized);
(b) by pressing the hot water button, solenoid valve 8 is set to output to wand 5; and
(c) by pressing the steam button, solenoid valve 8 is set to output to wand 5 and heater 3 is set to heat the water to turn it into steam.

The innovative aspect of the present machine, as mentioned above, lies in the fact that the non-return valve 4 is integrated into the solenoid valve 8 so as to form one body with it, thus further reducing the number of machine components and simplifying its assembly.

It is clear that the embodiment of the machine according to the invention described and illustrated above is only an example susceptible to many variations. In particular, the shape, size and arrangement of the various components may be varied according to constructional requirements as long as the general configuration of the hydraulic circuit illustrated above is maintained.

It should also be noted that the machine illustrated in Fig.1 could also vary in other aspects not related to dispensing management, such as the type of pump 2, heater 3, or spring-loaded non-return valve 4.

## Claims

1. Coffee machine for domestic use, comprising:
- a water tank (1)
- a pump (2) which draws water from said tank (1);
- a heater (3) which receives water from said pump (2) and is capable of heating the water to turn it into steam;
- a spring-loaded non-return valve (4) which controls an outlet to a device for extracting coffee;
- a wand (5) for dispensing hot water or steam;
- a two-way diverter solenoid valve (8) which receives hot water/steam from said heater (3) and conveys it to said spring-loaded non-return valve (4) or to said wand (5) depending on the setting received via corresponding buttons of a machine control panel, said buttons also being operatively connected to said heater (3) to set its water heating level; **characterised in that** the spring-loaded non-return valve (4) is integrated in the two-way diverter solenoid valve (8) so as to form with it a single body.

2. Machine according to claim 1, **characterised in that** the pump (2) is a self-priming pump connected to the tank (1) also via a return conduit (7).

3. Machine according to any of the preceding claims, **characterised in that** it further comprises a flow meter (6) arranged on the connection line between the tank (1) and the pump (2).

4. Machine according to any of the preceding claims, **characterised in that** the spring-loaded non-return valve (4) is a mushroom valve with a conical spring.

## Patentansprüche

1. Kaffeemaschine für den Hausgebrauch, umfassend:
- einen Wassertank (1)
- eine Pumpe (2), die Wasser aus dem Tank (1) ansaugt;
- einen Heizer (3), der Wasser von der Pumpe (2) aufnimmt und in der Lage ist, das Wasser zu erhitzen, um es in Dampf umzuwandeln;
- ein federbelastetes Rückschlagventil (4), das einen Auslass zu einer Vorrichtung zum Extrahieren von Kaffee steuert;
- eine Düse (5) zum Abgeben von heißem Wasser oder Dampf;
- ein Zweiwege-Umleitungsmagnetventil (8), das heißes Wasser/Dampf von dem Heizer (3) aufnimmt und es zu dem federbelasteten Rückschlagventil (4) oder zu der Düse (5) leitet, abhängig von der Einstellung, die über entsprechende Tasten auf einem Steuerfeld der Maschine empfangen wird, wobei die Tasten mit dem Heizer (3) auch wirkverbunden sind, um dessen Wassererwärmungsstufe einzustellen;
**dadurch gekennzeichnet, dass** das federbelastete Rückschlagventil (4) in das Zweiwege-Umleitungsmagnetventil (8) integriert ist, um mit diesem einen einzigen Körper auszubilden.

2. Maschine nach Anspruch 1, **dadurch gekennzeichnet, dass** die Pumpe (2) eine selbstansaugende Pumpe ist, die mit dem Tank (1) auch über eine Rücklaufleitung (7) verbunden ist.

3. Maschine nach einem der vorstehenden Ansprüche,
**dadurch gekennzeichnet, dass** sie ferner einen Durchflussmesser (6) umfasst, der an der Verbindungsleitung zwischen dem Tank (1) und der Pumpe (2) angeordnet ist.

4. Maschine nach einem der vorstehenden Ansprüche,
**dadurch gekennzeichnet, dass** das federbelastete Rückschlagventil (4) ein Pilzventil mit einer konischen Feder ist.

## Revendications

1. Machine à café à usage domestique, comprenant :
- un réservoir d'eau (1)
- une pompe (2) qui aspire l'eau dudit réservoir (1) ;
- un dispositif de chauffage (3) qui reçoit l'eau de ladite pompe (2) et qui est capable de chauffer l'eau pour la transformer en vapeur ;
- un clapet anti-retour à ressort (4) qui commande une sortie vers un dispositif d'extraction de café ;
- une lance (5) pour la distribution d'eau chaude ou de vapeur ;
- une électrovanne de dérivation à deux voies (8) qui reçoit de l'eau chaude/de la vapeur dudit dispositif de chauffage (3) et l'achemine vers ledit clapet anti-retour à ressort (4) ou vers ladite lance (5) en fonction du réglage reçu par l'intermédiaire de boutons correspondants d'un panneau de commande de machine, lesdits boutons étant également reliés de manière opérationnelle audit dispositif de chauffage (3) pour régler son niveau de chauffage de l'eau ;
**caractérisée en ce que** le clapet anti-retour à ressort (4) est intégré dans l'électrovanne de dérivation à deux voies (8) de manière à former avec elle un seul corps.

2. Machine selon la revendication 1, **caractérisée en ce que** la pompe (2) est une pompe auto-amorçante reliée au réservoir (1) également par l'intermédiaire d'un conduit de retour (7).

3. Machine selon l'une quelconque des revendications précédentes, **caractérisée en ce qu'**elle comprend en outre un débitmètre (6) agencé sur la ligne de raccordement entre le réservoir (1) et la pompe (2).

4. Machine selon l'une quelconque des revendications précédentes, **caractérisée en ce que** le clapet anti-retour à ressort (4) est un clapet à champignon avec un ressort conique.
